# EUROPÄISCHE PATENTSCHRIFT

(11) **EP 1 899 807 B1**
(45) Veröffentlichungstag und Bekanntmachung des Hinweises auf die Patenterteilung: **31.12.2014**
(21) Anmeldenummer: 06753252.3
(22) Anmeldetag: 07.06.2006
(51) Int. Cl.: G06F 9/445

(54) **VERFAHREN UND SYSTEM ZUR VERTEILUNG VON KONFIGURATIONEN AUF CLIENTRECHNER**
METHODS AND SYSTEM FOR THE DISTRIBUTION OF CONFIGURATIONS TO CLIENT COMPUTERS
PROCEDE ET SYSTEME DE REPARTITION DE CONFIGURATIONS SUR L'ORDINATEUR CLIENT

(30) Priorität: 30.06.2005 DE 102005030529
(43) Veröffentlichungstag der Anmeldung: 19.03.2008
(73) Patentinhaber: Deutsche Telekom AG, 53113 Bonn (DE); Albert-Ludwigs-Universität Freiburg, 79085 Freiburg (DE)
(72) Erfinder: SCHULZ, Ulrich, 53332 Bornheim (DE); SUCHODOLETZ, Dirk, von,, 79104 Freiburg (DE)
(74) Vertreter: 2K Patentanwälte Blasberg Kewitz & Reichel
(86) Internationale Anmeldenummer: PCT/DE2006/000978
(87) Internationale Veröffentlichungsnummer: WO 2007/003152

(56) Entgegenhaltungen:
- EP-A- 1 387 547
- EP-A2- 1 339 034
- US-A1- 2001 052 069
- US-A1- 2002 073 201
- US-B1- 6 711 688
- NO AUTHOR NAME SUPPLIED IN SOURCE DATA: "Operating system choice based on connection domain", IP.COM JOURNAL, IP.COM INC., WEST HENRIETTA, NY, US, 20 June 2003 (2003-06-20), XP013008895, ISSN: 1533-0001

## Beschreibung

### Gebiet der Erfindung

### Stand der Technik

Der momentane Stand auf dem Thin-Client-Sektor ist der, dass die Thin-Clients als Betrachter (Visualisierung des Outputs von Anwendungssoftware) dienen, welche die (ggf. grafische) Darstellung übernehmen. Die eigentliche Rechenarbeit (die Ausführung von Anwendungssoftware) wird auf dem Application-Server ausgeführt. Klassische Vertreter dieser Funktionsweise ist das Citrix-System von der gleichnamigen Firma, das SUN-Ray-Projekt der Firma SUN, Terminal-Server-Varianten der Firma Microsoft sowie das X-Terminal-System im Unix-Bereich und das LTSP-System (Linux-Terminal-Server-Project) im Open-Source-Bereich. Dazu sind die Thin-Client Systeme entweder mit Festplatten oder Boot-Eproms (also nicht flüchtigen Speichermedien) ausgerüstet, welche die Betriebs-Software enthalten, um nach dem Einschalten des Client Rechners die Visualisierung der eigentlichen Rechenvorgänge auf dem Server sicherzustellen.

Aus der US 2001/052069 ist ein Verfahren bekannt, bei dem ein spezifisches Bootimage auf der Basis einer Authentifizierung geladen wird. Diese Image wird jedoch auf die Hardware geladen und nicht auf eine virtuelle Maschine.

Aus dem Dokuemnt "Operating System choice based on connection domain" ISSN 1533-0001 wird auf der Basis der Domain ein Betriebssystem von einer Festplatte gestartet.

Weiter Druckschriften auf diesem Gebiet sind EP 1 387 547 A US 2002/073201 und "Operating system choice base on connection doman" IP.COM Journal, IP.COM INC. ISSN 1533-0001, die sich mit virtuellen Umgebungen beschäftigen.

Kennzeichnend für diese Thin-Client Systeme ist, dass die Anwendungssoftware auf einem oder mehreren zentralen Servern installiert ist und auch dort abläuft, während die Thin-Client Rechner nur die nachgeordnete Funktion der Visualisierung übernehmen. Kennzeichnend ist außerdem die Tatsache, dass die aktuellen, oben genannten Systeme sämtlich auf die Verwendung eines Betriebssystems festgelegt sind.

Kurs- oder Poolräume zum Abhalten von Lehrveranstaltungen gehören zur Grundausstattung und zu den klassischen Aufgabenfeldern eines Universitätsrechenzentrums oder anderen Rechnenzentren. Üblicherweise geben Mitarbeiter des RZ eine Reihe von Standardkursen. Darüberhinaus können Mitglieder der verschiedenen Fakultäten diese Räume für eigene Veranstaltungen buchen. Das Spektrum der Kurse reicht dabei von Einstieg in HTML und Internetpublishing, über die Nutzung von Office-Paketen bis hin zur Linux-Administration und Netzwerkkursen. Die Anforderungen an das installierte Betriebssystem, die notwendige Software und die Privilegien der Benutzer im Ressourcenzugriff unterscheiden sich erheblich.

Mögliche "alte" Lösungen im Rechenzentrum arbeiteten z.B. mit WindowsNT-Maschinen und einer eigenen Benutzerverwaltung. Begrenzt durch die Kapazität der eingesetzten Festplatten und Problemen mit der Windows-Registrierungsdatenbank war es nicht möglich, eine "vollständige" Installation aller gewünschten Softwarepakete in einer Umgebung zu erreichen. Zudem wurden die Maschinen händisch administriert, so dass selten alle Installationen Identisch sind. So war es nicht ungewöhnlich, dass auf unterschiedlichen Maschinen verschiedene Pakete nicht funktionierten oder nicht vollständig installiert waren. Da nicht vor jedem Kurs aufwändige Tests realisierbar waren, lag das Risiko beim Kursleiter.

Damit zumindest eine gewisse Flexibilität erreicht wurde, kamen Wechselfestplatten zum Einsatz. Das bedeutete jedoch, dass diese vor Kursen unter Umständen durchgetauscht werden mussten. Damit ging ein ziemlicher Zeitaufwand einher und verschiedene Platteninstallationen mussten gepflegt werden. Hinzu kamen Probleme mit den Wechselrahmen. Deshalb konnten die Räume außerhalb von Kursen nicht der allgemeinen öffentlichkeit als Arbeits- und Übungsplätze zur Verfügung gestellt werden. Das hier erläuterte Kurs- bzw. Schulungsmodell zeigt die Anwendung und die Vorteile der New Thin Client Lösung exemplarisch auf, ist aber nicht auf diese beschränkt.

### Aufgabe der Erfindung

Die grundlegende Idee ist, die üblichen Fat Client Funktionalitäten (Standard PC) unter einem wahlfreien Betriebssystem auf Diskless Client Hardware performant bereitzustellen.

Ziel der Erfindung ist unter anderem die Flexibilisierung des Kursbetriebes in Rechenzentren. Dabei möchte das Rechenzentrum nicht mehr, wie fast überall üblich eine Kursumgebung fest vorgeben, sondern den Kurshaltern ein weitgehendes Mitspracherecht bei der Auswahl und Konfiguration der eingesetzten Software einräumen.

### Lösung der Erfindung

Gelöst wird die vorliegende Aufgabe durch eine Erfindung mit den Merkmalen der unabhängigen Ansprüche.

Hier beinhaltet die gewählte Lösung folgende Punkte der Realisierung:
Als Grundbetriebssystem wird vorzugsweise Linux eingesetzt, da es eine breite Treiberunterstützung aufweist und welches von einem zentralen Bootserver startet (als Diskless Client) und
damit die Administration aller Poolmaschinen drastisch vereinfacht.

Das Betriebssystem ist auf keinem Kursrechner lokal installiert. Damit sinkt der Updateaufwand erheblich und verhindert Manipulationen.

Alle Kursinhalte, die nicht mit der Linux-Standardinstallation abgedeckt werden können, wie Windows-XP-basierte Kurse (oder quasi jedes andere PC-Betriebssystem), laufen auf einer virtuellen Maschine (z.B. Vmware).

Die virtuelle Maschine erlaubt, das Kurssystem zentral zu installieren und zu verteilen:
Kursleiter können ihre Inhalte (Software, Betriebssystem, Einstellungen) zu Hause auf ihrem eigenen PC oder Laptop oder an beliebigen anderen Stellen vorbereiten, wo eine virtuelle Maschine installiert ist.

Ein auf dem zentralen Server installierter Kurs steht automatisch auf allen Poolmaschinen zur Verfügung, wobei die Zuordnung des Kurses automatisch erfolgen kann, basierend auf einem Login oder in Kombination mit einem Auswahldialog. Bei der automatischen Zuordnung erfolgt dies vorzugsweise anhand von festen Netzwerkadressen (z.B. MAC), so das eine Räumliche Begrenzung stattfinden kann. Durch das Login können virtuelle Maschinen variabel und sogar individuell zugeordnet werden. Auch die Kombination mit einem Auswahlmenü ist möglich, wobei in Abhängigkeit der eindeutigen Kennung oder dem Login, eine Auswahl an virtuellen Maschinen bereitgestellt wird, aus denen der Benutzer wählen kann.

Somit steht an allen Rechnern die exakt gleiche Oberfläche und Ausstattung eines Kurses zur Verfügung.

Änderungen an der Installation sind nur maschinenlokal, und nach einem Neustart unwirksam. Manipulationen sind so ausgeschlossen, Viren und Würmer (Probleme populärer Betriebssysteme) können sich nicht dauerhaft einnisten. Der Betrieb ist robuster, und auch unbeaufsichtigt unproblematisch.

Die Kursräume bieten nun eine erheblich breitere Palette an Betriebsmöglichkeiten (z.B. Linux als Grundsystem und verschiedenste andere Betriebssysteme im Vmware).

In der freien Übungszeit kann jeder Nutzer genau seine Kursumgebung anwenden, unabhängig davon, wer sonst noch im Raum arbeitet.

Die Umschaltzeiten zwischen verschiedenen Kursen sind minimal und benötigen lediglich die Zeit vom Ausloggen eines Benutzers und dem Neuanmelden des Nächsten.

Benutzern können innerhalb der virtuellen Maschine mit geringerem Risiko höhere Rechte (bis hin zum Systemadministrator) eingeräumt werden, da Veränderungen lediglich bis zum Neustart Bestand haben.

Das neue Poolkonzept erlaubt nun auch externen Anbietern, Kurse mit Software durchzuführen, die nicht vom Rechenzentrum selbst gestellt wird (werden kann). Diese wird für die Dauer eines Kurses eingespielt und anschließend wieder vom Server entfernt. Auch das langfristige Management verschiedener Kursinhalte vereinfacht sich wesentlich. Vorbereitete Images können über längere Zeiträume aufbewahrt werden, ohne dass sie dabei Veränderungen erfahren.

Das erfindungsgemäße System besteht aus einem oder mehreren zentralen Server Rechnern und - auf der Client-Seite - einem oder mehreren New-Thin-Client (NTC) Rechnern.

Bei dem hier beschriebenen New-Thin-Client System ist die Verteilung der Aufgaben anders geregelt. Hier findet die eigentliche Rechenarbeit (Ausführung von Anwendungssoftware) auf der Client-Seite (also auf den NTC Rechnern) statt. Diese verfügen über keine auf Festplatten oder in Eproms (oder in anderen nicht flüchtigen Speichermedien) enthaltene Betriebssystem-Software. Ein zentraler Server stellt dem New-Thin-Client Rechner die Services zur Verfügung, um die Basis-Betriebssoftware (also das Basis Betriebssystem des NTC Rechners, z.B. Linux/Unix) über das Netzwerk zu laden und damit zu booten. Ist nach dem Laden auf dem NTC Rechner dieses Basis-Betriebssystem installiert, so befindet es sich vollständig im RAM (also im flüchtigen Speicher) des NTC Rechners und ist nach dem Ausschalten des New-Thin-Client Rechners verloren. Es handelt sich um eine reine Software-Lösung, die auf den New-Thin-Client Rechnern keine besonderen Maßnahmen voraussetzt - außer natürlich der Fähigkeit, übers Netz zu booten.

Hieraus ergeben sie eine Reihe von Vorteilen: An die New-Thin-Client Rechner werden nur minimalste Hardware-Voraussetzungen gestellt.

Die Rechenlast auf den/dem zentralen Server/n ist bis auf die Bootphase der NTC Rechner sehr gering im Vergleich zu bisherigen Thin-Client Systemen.

Das Basis-Betriebssystem (z.B. Linux/Unix) jedes New-Thin-Client Rechners befindet sich zentral einmal auf einem Server und ist für alle New-Thin-Client Rechner identisch. Änderungen/Wartungen sind also ausschließlich an einer Stelle auf dem zentralen Server vorzunehmen und sind dann sofort für alle NTC Rechner verfügbar.

Die vorliegende Lösung bildet die Fähigkeiten der bisherigen, handelsüblichen Thin-Client Systeme (RDP, Citrix, X11 etc.) quasi nebenbei mit ab. Das geschieht bei keinem oder nur geringfügig höherem Aufwand und ohne sich die handelsüblichen Administrationsprobleme einzuhandeln.

Nach Booten des NTC Rechners hat der Benutzer die Wahl, mit welchem Secondary-Betriebssystem oder mit welcher Variante eines Secondary-Betriebssystems er arbeiten möchte. Das Basis-Betriebssystem enthält einen Hardware-Simulator (z.B. VMWare), der dem Secondary-Betriebssystem, welches der Benutzer für seine Arbeit ausgewählt hat, die jeweils benötigte Hardware virtuell zur Verfügung stellt. Dieses ausgewählte (Secondary-) Betriebssystem wird dann on-top des Basis-Betriebssystems (z.B. Linux/Unix) gebootet. Dabei werden dem New-Thin-Client Rechner (und damit dem Secondary-Betriebssystem) jeweils das benötigte Festplatten-Image vom darunterliegenden Basis-Betriebssystem ebenfalls virtuell zur Verfügung gestellt.

Weitere Vorteile dieses NTC Systems sind also:
Der jeweilige Benutzer an einem New-Thin-Client Rechner ist bei der Wahl, mit welchem Betriebssystem er arbeiten will, nicht festgelegt.

Es können gleichzeitig mehrere Images von verschiedenen Secondary-Betriebssystemen und/ oder verschiedene Varianten von Secondary-Betriebssystemen vorgehalten werden.

Auch die diversen Secondary-Betriebssystem Images existieren nur einmal auf einem zentralen Server. Auch hier sind Änderungen/Wartungen also ausschließlich an einer zentralen Stelle vorzunehmen und sind dann sofort für alle New-Thin-Client Rechner verfügbar.

Um einen flexiblen Kursbetrieb zu gewährleisten, können die Kurshalter ihre gewünschte Windows-Kursumgebung auf beliebigen Maschinen, die Vmware installiert haben, vorbereiten. Dabei gibt es eine Auswahl an vorkonfektionierten Installationen, aus denen sie etwas passendes auswählen können und nach Bedarf Änderungen vornehmen. Zum einfachen Mangement der verschiedenen VM-Installationen steht allen Kursleitern ein eigens entwickeltes Programm unter Windows zur Verfügung. Mit diesem können sie Images im Kursraum einstellen, verfügbar machen und wieder entfernen. Durch dieses Tool haben auch weniger erfahrene Kursleiter die Möglichkeit, ihre Kurse vorzubereiten und anzupassen. Weitere Software-Tools zur Umlenkung von beispielsweise einzelnen Kursplätzen auf den Beamer sind ebenfalls denkbar.

Die Nutzbarkeit und Robustheit der Installation hat sich erhöht, so dass auch ausserhalb der Kurszeiten die Räume für freies Üben problemlos geöffnet werden können. Das Konzept der Windows-Images erlaubt sehr flexible Abläufe, Kurse können nun dicht hintereinander erfolgen, bei gleichzeitig langfristigen Vorbereitungen. Es bleiben jedoch noch Punkte die zu lösen sind;

Generell erlaubt diese Lösung aus Linux Diskless Clients zusammen mit VMware die Senkung des Personalaufwandes: Nach der Investition in die Serverinstallation und Anpassung der Client-Umgebung, fallen nur noch die üblichen Wartungsarbeiten an der installierten Hardware und auf einem der Server an. Die Leerlaufzeiten des Raumes in Umbauphasen, das personalaufwändige Wechseln der Festplatten und dasumständliche Installieren von einer Vielzahl von Maschinen entfällt.

Bisherige Thin-Client Lösungen visualisieren den Output von Anwendungssoftware, die auf einem zentralen Server ausgeführt wird, also nicht auf den Thin-Client Rechnern. Weiterhin bedürfen Thin-Client Lösungen auf der Client-Seite nicht flüchtiger Speicher (Festplatten, Proms, Eproms etc.), die im ausgeschalteten Zustand des Thin-Clients festgelegte Betriebssystem- oder Anwendungssoftware beinhalten.

Im Gegensatz dazu läuft die Anwendungssoftware in einem NTC System ausschließlich auf den NTC Rechnern ab, der zentrale Server reicht die Anwendungssöftware dem NTC Rechner nur an. Auf der Client-Seite (dem NTC Rechner) ist in keiner Form das Betriebssystem oder die Anwendungssoftware auf einem nicht flüchtigen Speicher (Festplatte, Eprom etc.) vorhanden; beides wird dem NTC Rechner nach dessen Start durch einen zentralen Server angereicht. Durch die ausschließliche Nutzung flüchtiger Speicher auf der Client-Seite, sowohl für die Bestriebssystem Software, als auch für die Anwendungssoftware, besteht nach dem Starten des NTC Rechners eine Wahlfreiheit insbesondere für das (Secondary-) Betriebssystem (z.B. LINUX, UNIX, Windows 9x/2000/XP etc.), das auf dem NTC Rechner abläuft.

Die vorliegende Erfindung führt das Konzept der zentralgesteuerten Rechnerpools konsequent fort. Dabei versucht sie, die notwendigen Arbeitsschritte der Einrichtung soweit zu automatisieren, dass z.B. aus einer Standard-SuSE-Linux-Installation ein Server für einen großen Pool von Maschinen mit wenigen Handgriffen aufgesetzt werden kann.

Thin-Clients sollen einfach zu handhaben sein, dabei aber gleichzeitig eine gewisse Auswahl an Hardware unterstützen, da selten eine homogene Hardware-Ausstattung vorausgesetzt werden kann. Die zu verwendende Bootsoftware soll keine teure Spezialhardware erfordern, sondern möglichst die Gegebenheiten der verwendeten PC-Hardware ausnutzen. Die Bootsoftware muss nach dem Ausschalten des Gerätes wieder verfügbar und automatisch ohne besondere Benutzerinteraktion im Standardbetrieb aktivierbar sein.

Intels PXE - die PXE-Option ist im BIOS fast aller Motherboards mit onboard Netzwerkkarte vorhanden und stellt eine weitere Möglichkeit dar, über das Netz eine festplattenlosen Maschine zu starten. Mittels DHCP/TFTP wird ein PXE-Image geladen, welches dann weitere Bootfunktionalität zur Verfügung stellt. Das Syslinux-Paket enthält neben anderen Bootfunktionen auch die Unterstützung für PXE. Dieses ist dann in der Lage, spezielle Linux-Kernel per TFTP zu booten und zu starten.

Die Einrichtung eines Filesystems, speziell des RootFilesystems eines Thin-Clients ohne eigenen Festspeicher, weicht zwangsläufig von der gewohnten Festplatteninstallation ab. Dabei gibt es eine Reihe von Designaspekten, die beachtet werden sollten.

Der Aufbau des Dateisystems der freien Unix-Derivate unterwirft sich dem File System Hierarchy Standard, welcher eine Einteilung der Dateien nach lokal bzw. verteilbar und statisch bzw. dynamisch vornimmt.

Erklärtes Ziel der Einrichtung des Dateisystems der Thin-Clients ist es, eine große Zahl von Maschinen unabhängig von ihrer späteren Funktion oder ihrer Ausstattung aus einem einheitlichen Verzeichnis bedienbar zu machen. Es spart Festspeicherplatz, welcher angesichts heutiger Festplattengrößen nicht mehr der Mangelfaktor ist, aber bei sehr vielen Geräten zu einem Administrationsproblem wird. Zusätzlich wirkt sich ein einheitliches Verzeichnis für alle Clients günstig auf das Caching-Verhalten des Servers aus. Häufig angeforderte Datenblöcke können so zügig aus dem Arbeitsspeicher bedient werden.

Gleichzeitig soll auf den Clients ein so grosser Teil wie möglich des Dateisystems read-only über NFS zur Verfügung stehen. Dieses vermeidet Interferenzen zwischen verschiedenen Clients und trägt wesentlich zur Erhöhung der Sicherheit in einem Netzwerk aus Diskless Clients bei. Es gibt jedoch Bereiche, wie Verzeichnisse für Konfigurationsdateien und das /var-Verzeichnis, welche es erlauben sollten, zumindest in großen Bereichen, Programmen auf dem Client Schreibvorgänge zu gestatten. Nur so lässt sich eine dynamische Konfiguration erreichen. Diese Bereiche wird man vorwiegend im RAM des Clients ablegen wollen, um keine sensiblen Konfigurationsverzeichnisse auf dem Server speziell für jeden Client einrichten oder öffnen zu müssen.

Die Initialisierung des hier vorgestellten Linux Diskless Clients erfolgt analog zum Kernel-Start neuerer Linuxdistributionen. Vor dem eigentlichen Mounten des Rootfilesystems wird eine minimale Ramdisk-Umgebung ausgeführt, welche eine Reihe von Konfigurationsaufgaben übernimmt wie z.B. das Laden spezieller Kernelmodule für Dateisysteme oder RAID-Festplatten. Die Vorteile der Zweiteilung der Boot-Prozedur liegen in der Vereinfachung des Kernels und des Debuggings. Nur jene Kernelemente sind fest in diesen eingebunden welche man zum Start benötigt, alle weiteren können bei Bedarf nachgeladen werden.

Die Thin-Clients erfordern zur Installation einen gegenüber der klassischen Workstation erhöhten Einrichtungsaufwand, der sich jedoch bei einer schon geringen Zahl gleichartiger Rechnerarbeitsplätze bezahlt macht. Die hier präsentierte Lösung hatte bei ihrer Implementierung die spätere Skalierung im Blick: Ausgehend von der einmal geschaffenen Basis läßt sich mit nur geringem Mehraufwand, der stark unter dem für die einzelne klassische Workstation liegt, eine weit höhere Zahl verwalten. Sie stellt damit ein belastbares Konzept für die Betreuung einer immer größeren Zahl von Rechnern durch weniger Personal dar. Andere Anwendungsgebeite ergeben sich als Plattform zur Remote-Installation von kleineren Inseln über abgesetzte Server.

Das New-Thin-Client System besteht aus der Kombination von mindestens einem Server Rechner und mindestens einem, in der Regel jedoch mehreren bzw. vielen, New-Thin-Clients (NTC)

Der Server Rechner stellt neben seiner Funktion als File-Server noch alle weiteren benötigten Netzwerk-Dienste zur Verfügung.

Der New-Thin-Client Rechner verfügt nur über eine Minimal-Ausstattung, die neben den Standardclusterschnittstellen auf jeden Fall ein TFTP-Boot-fähiges Netzwerk-Environment umfasst.

Im Detail werden an den Server folgende Anforderungen gestellt:
Eine hinreichend leistungsfähige Netzwerkanbindung, um die Requests aller NTCs in einer sinnvollen Response-Zeit bearbeiten zu können.
Eine hinreichend große Festplatten-Speicherkapazität, damit neben den Heimat-Verzeichnissen (home-directories) der einzelnen Benutzer auch Platz für temporäre Dateien der jeweiligen Client-Rechner vorhanden ist. Zudem sind auf dem Server Rechner noch die Boot-Images der NTC Rechner vorzuhalten.

Falls die Leistungsfähigkeit eines einzelnen Servers nicht ausreicht, können weitere Server dem System hinzugefügt werden, um die benötigten Netzwerk-Dienste auf mehrere Server zu verteilen und so eine hinreichende Leistungsfähigkeit sicher zu stellen.

Jeder einzelne NTC Rechner ist hingegen nur minimal ausgestattet. Hierzu gehören Lokale Standard-Schnittstellen, wie Tastatur, Maus, Monitor und ggf. auch Drucker-Port, CPU und RAM, LAN-Anbindung über wired-LAN oder wireless-LAN und einem FTP-Boot-fähigen Netzwerkenvironment wie z.B. PXE oder etherboot.

Auch das Software-System ist zwischen Server und Client verzahnt. Die Basis sowohl für den Server als auch den Client ist das (Basis-) Betriebssystem z.B. Linus/Unix (dies kann auch durch andere Betriebssysteme realisiert werden). Auf dem Client ist jedoch in dem über TFTP zu ladenden Basis-System ein Hardware-Simulator untergebracht (z.B. VMWare), der es gestattet, auf dem NTC Rechner jedes gewünschte Ziel- (oder auch Secondary-) Betriebssystem on top des vorhandenen Basis-Betriebssystems auszuführen. Dies kann entweder ein Linux/Unix-System sein aber z.B. auch jede Variante eines Windows-Systems, wie z.B. Windows 98 oder auch Windows XP.

Besonderes Merkmal ist hier, dass der NTC sein Basis-Betriebssystem erst beim Booten des Systems über TFTP als Image erhält (diskless-client). Dieses stellt die Basis dar, auf der der Emulator dem Benutzer zum Zeitpunkt des Einloggens das gewünschte Ziel-Betriebssystem auch wieder als Image zur Verfügung stellt.

Diese Ziel- (oder auch Secondary-) Betriebssysteme sind in den unterschiedlichsten Varianten und Ausprägungen ein einziges Mal als Image auf einem zentralen Server Rechner gespeichert. Die einzelnen NTC Rechner erhalten also immer das identische Image. Eventuelle Modifikationen nimmt der Benutzer an seinem NTC Rechner zur Laufzeit lokal vor. Sofern der Benutzer diese Änderungen nicht in seinem Heimat-Verzeichnis (home-directory) auf dem zentralen File-Server speichert, gehen alle lokalen Modifikationen beim Ausschalten des NTC Rechners wieder verloren, da der NTC Rechner nach einem erneuten Booten wieder mit dem unmodifizierten Original-Image (vom zentralen Server) arbeitet.

Die Administration der Software-Versionen, mit denen die Benutzer arbeiten, erfolgt also nur an einer einzigen Stelle, nämlich im jeweiligen Betriebssystem-Image, welches die jeweiligen Benutzer beim Booten auswählen. Änderungen dort stehen damit sofort allen anderen Benutzern auch zur Verfügung, welche beim Einloggen das gleiche Image ihrer Betriebssystem-Variante auswählen.

Der Server stellt dem System folgende Netzwerk-Dienste zur Verfügung:
- DHCP und TFTP beim Booten des Systems
- NFS/Network-Block-Device als Swap-Space für die Clients
- LDAP zur Verwaltung z.B. der Benutzer-Accounts
- NFS/Network-Block-Device und SAMBA als File-Server (NFS/Network-Block-Device bei Linux/Unix, Samba bei WinXX)

Neben den Netzwerk Dienten muss der Server auch die (Basis-) Betriebssystem-Images vorhalten, mit denen die Clients ihren Boot-Vorgang ausführen.

Die einzige Software, die der Client mitbringen muss, ist die Möglichkeit, via Boot-Prom das DHCP und TFTP-System zum Booten in Anspruch zu nehmen. Dies ist z.B. mit einem Standard-PXE-Bootprom zu leisten.

Für die Erstellung der Images sind verschiedene Möglichkeiten vorhanden.

Eine Methode ist z.B. die, einen einzelnen Client-Rechner, der als Referenz-Rechner fungiert, mit einer Festplatte auszustatten. Auf dieser Festplatte wird das Zielsystem (Secondary-System) für die NTC installiert und mit der beabsichtigten Software ausgestattet (z.B. neben VMWare und Windows XP auch mit der Star-Office-Suite oder der Windows Office-Suite oder einer anderen erforderlichen Software). Man ist also in der Lage, das gewünschte System komplett auf Funktionsfähigkeit zu testen. Dann wird z.B. mit Hilfe des Linux/Unix-Befehls rsync über das Netzwerk auf dem Server-Rechner ein Festplatten-Image erstellt, welches dann allen diskless NTC Rechnern lesend zur Verfügung steht.

Einige Linux-Varianten (z.B. SuSE-Linux) gestatten es auch, ein komplettes System in einem Verzeichnis zu installieren und dort auch Erweiterungen und Modifikationen vorzunehmen. Hier wird klein separater Referenz-Rechner benötigt, da der direkte Zugriff auf das Image gegeben ist.

Nach dem Einschalten des NTC Rechners sendet dieser einen DHCP-Broadcast, um vom DHCP-Server die für ihn gültige IP-Adresse zu erfahren. Mit dieser Adresse wendet er sich an den TFTP-Server und holt von dort sein Basis-Boot-Image (z.B. LINUX/Unix).

Nach dem Booten dieses Images steht ein Standard- (Linux/Unix-) Login-Prompt zur Verfügung. Hier kann sich der Benutzer entweder über die klassische Methode mit user-name und password identifizieren oder aber er verwendet ein anderes Verfahren, wie z.B. mit Hilfe von Smart-Cards oder einem Finger-Print-Identifier.

Beim Einloggen gibt der Benutzer entweder an, mit welcher Secondary- oder Ziel-Betriebssystem-Variante er arbeiten möchte, oder diese Information ist in der LDAP-Datenbank bereits enthalten und kann dort abgerufen werden. Das zugrunde liegende Linux/Unix-System startet dann den Emulator (z.B. VMWare), der wiederum auf das gewünschte Secondary-Betriebssystem-Image zugreift, welches dem Emulator selbst dann über NFS zur Verfügung gestellt wird.

Ist der Benutzer dann eingeloggt, stellt der Server-Rechner seine Dienste als File-Server zur Verfügung, um - transparent für den Benutzer - die Daten des Benutzers in seinem Benutzer-Verzeichnis zu speichern. Das Ausloggen erfolgt dann entweder auf die klassische Methode oder z.B. bei Verwendung von Smart-Cards dadurch, dass der Benutzer die SmartCard aus dem Kartenleser entnimmt. Je nach verwendeter Betriebssystem Variante wird die aktuelle Session des Benutzers in seinem Benutzer-Verzeichnis gespeichert und steht nach einem erneuten Einloggen, ggf. auf einem anderen Client-Rechner, dem Benutzer wieder zur Verfügung.

Kurze Beschreibung der Figur:

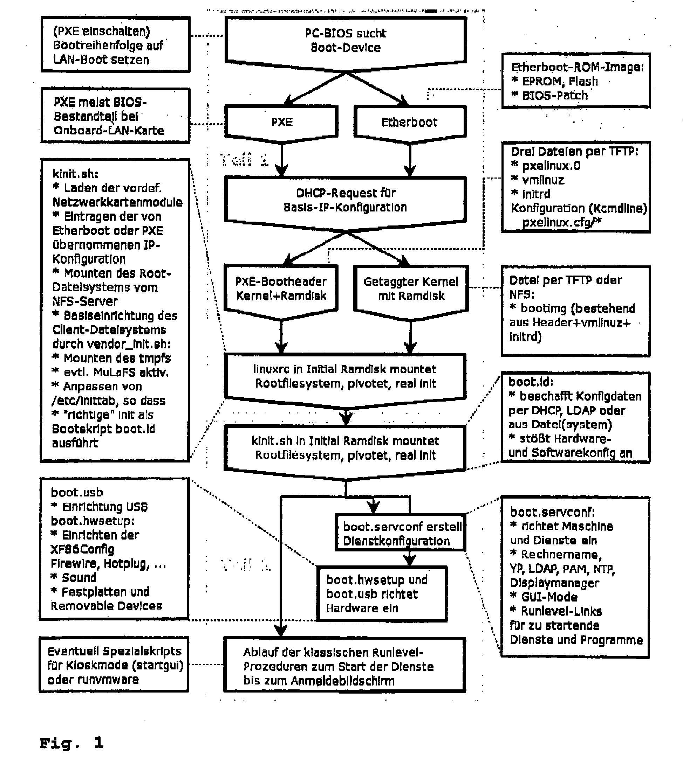

Figur 1 zeigt den Ablauf eines festplattenlosen Bootens eines Linux-Systems

### Detaillierte Beschreibung der Figur:

Die Figur 1 zeigt den Ablauf eines festplattenlosen Bootens eines Linux-Systems, wobei dieses entweder über PXE oder über ein PROM auf der Ehternetkarte (Etherboot) bootet. Als nächstes wird ein DHCP-Request zur Bereitstellung der IP-Adresse gesendet, wobei diese auch auf der Basis der MAC zugeteilt werden kann. Draufhin wird eine RAM-Disk mit einem Basis Kernel gebootet, um dann die weiteren Filesysteme zu mounten. Im zweiten Schritt wird der Runlevel des Systems bestimmt und die Dienste entsprechend des Rechnernamens gestartet, bis dann ein Login zur Verfügung steht. Auf der Basis des Logins wird dann z.B. über eine LDAP Konfiguration, das konfigurierte Boot-Image mit der VMware gestartet. Diese kann auch sofort gestartet werden, ohne Login. Auch können in Abhängigkeit von Benutzergruppen eine Reihe von Images bereitgestellt werden, die der Benutzer auswählen kann. Somit sind eine Vielzahl von Varianten möglich.

## Patentansprüche

1. Verfahren zur Verteilung von einer Vielzahl von Rechnerkonfigurationen auf einer Vielzahl von Clients in Kurs oder Poolräumen von mindestens einem Server, der die Vielzahl von Rechnerkonfigurationen als virtuelle Maschinen verwaltet, wobei jede Rechnerkonfiguration als ein Image auf dem Server abgelegt ist, und für die Vielzahl von Clients bestimmt ist, **dadurch gekennzeichnet, dass** ferner auf dem Server ein Image eines ersten Betriebssystem abgelegt ist, das ein Netzwerkbooten erlaubt,
umfassend folgende Schritte:
- Netzwerkbooten des Clients von dem Server durch Verwendung des Images mit dem ersten Betriebssystems mit einem Hardware-Emulator zum Starten einer virtuellen Maschine, wobei das erste Betriebssystem nicht auf einer lokalen Platte des Clients abgelegt ist, so dass es nach dem Abschalten des Clients neu geladen werden muss;
- automatisches Laden einer der virtuellen Maschine mit einem zweiten Betriebssystem als Image vom Server, das auf der Basis des Hardware-Emulators auf dem ersten Betriebssystems läuft, wobei die Auswahl der zu startenden virtuellen Maschine aus der Vielzahl von virtuellen Maschine auf der Basis eines oder mehrerer der folgenden Parameter erfolgt: Benutzer Login auf dem ersten Betriebssystem, Netzwerkadresse des Clients.

2. Verfahren nach dem vorhergehenden Anspruch, **dadurch gekennzeichnet, dass** der Server einen Speicherbereich aufweist, in dem Images für die zweiten Betriebssysteme abgelegt sind, wobei der Zugriff auf die Images von den folgenden Parametern abhängt: Benutzer Login, Netzwerkadresse.

3. Verfahren nach einem oder mehreren der vorhergehenden Ansprüche, **dadurch gekennzeichnet, dass** nach dem Laden des ersten Betriebssystems automatisch ein Menü geöffnet wird, das es dem Benutzer erlaubt, eine Auswahl eines zweites Betriebssystems vorzunehmen.

4. Verfahren nach dem vorhergehenden Anspruch, **dadurch gekennzeichnet, dass** die Auswahlpunkte im Menü eingegrenzt werden durch folgende Parameter: Benutzer Login, Netzwerkadresse.

5. Verfahren nach einem oder mehreren der vorhergehenden zwei Ansprüche, **dadurch gekennzeichnet, dass** die Auswahl der zweiten Betriebssysteme über Einträge in einem Verzeichnisdienst erfolgt, wie LDAP.

6. Verfahren nach einem oder mehreren der vorhergehenden Ansprüche, **dadurch gekennzeichnet, dass** ein Abspeichern des Zustandes des zweiten Betriebssystems auf einem Netzwerklaufwerk erfolgt, das einem Benutzer zugeordnet ist, so dass diese wahlweise auf ein oder mehrere zweite Betriebssysteme in einem anderen Zustand zugreifen kann.

7. Verfahren nach dem vorhergehenden Anspruch, **dadurch gekennzeichnet, dass** im Menü-Dialog die abgespeicherten zweiten Betriebsysteme als Alternative bereitgestellt werden, sobald sie vorliegen.

8. Serversystem zur Bereitstellung einer Vielzahl von Rechnerkonfigurationen auf einer Vielzahl von Clients in Kurs oder Poolräumen, wobei der Client aus dem Netzwerk bootet,
wobei das Serversystem die Vielzahl von Rechnerkonfigurationen als virtuelle Maschinen verwaltet, wobei jede Rechnerkonfiguration als ein Image auf dem Serversystem abgelegt ist, und für die Vielzahl von Clients bestimmt ist,
ferner ist auf dem Server ein Image eines ersten Betriebssystem abgelegt, das ein Netzwerkbooten erlaubt, wobei das ersten Betriebssystems mit einem Hardware-Emulator zum Starten einer virtuellen Maschine ausgestattet ist, wobei das erste Betriebssystem nicht auf einer lokalen Platte des Clients ablegbar ist, so dass es nach dem Abschalten des Clients neu geladen werden muss;
das erste Betriebssystem ist ausgebildet, um nach dem automatisches Laden einer der virtuellen Maschine mit einem zweiten Betriebssystem als Image auf der Basis des Hardware-Emulators des ersten Betriebssystems zu laufen, wobei die Auswahl der zu startenden virtuellen Maschine aus der Vielzahl von virtuellen Maschine auf der Basis eines oder mehrerer der folgenden Parameter erfolgt: Benutzer Login auf dem ersten Betriebssystem, Netzwerkadresse des Clients.

9. Serversystem nach dem vorhergehenden Anspruch, **dadurch gekennzeichnet, dass** eine Datenbank zur Verwaltung von Images für das zweite Betriebsystem vorhanden ist, über die der Zugriff auf die Images anhand eines der folgenden Merkmale gesteuert ist: Rechneradresse, Benutzer Login.

## Claims

1. Method of distributing a variety of computer configurations on a variety of clients in course or pool rooms of at least one server that manages the plurality of computer configurations as virtual machines, each machine configuration is stored as an image on the server, and determined for the variety of clients, **characterized in that**
also on the server an image of a first operating system is stored, which allows a network boot, comprising the steps:
- Network booting of the client from the server by using the Image with the first operating system with a hardware emulator to start a virtual machine, wherein the first operating system Is not stored on a local disk of the client, so that has to be re loaded after turning off the client;
- automatic loading of a virtual machine with a second operating system image from the server running on the basis of the hardware emulator to the first operating system, wherein the selection of the virtual machine to be started from the plurality of virtual machine is done on the basis of one or more the following parameters: user login on the first operating system, network address of the client.

2. Method according to the preceding claim, **characterized in that** the server comprises a memory area in which the Images for the second operating system are stored, wherein the access to the image depends on the following parameters: user login, network address.

3. Method according to one or more of the preceding claims, **characterized in that** a menu opens automatically after loading the first operating system, which allows the user to make a selection of a second operating system.

4. Method according to the preceding claim, **characterized in that** the selection points in the menu are limited by the following parameters: Users login, network address

5. Method according to one or more of the preceding two claims, **characterized in that** the selection of the second operating systems are provided by entries in a directory service, such as LDAP.

6. Method according to one or more of the preceding claims, **characterized in that** storage of the state of the second operating system Is on a network drive that is associated with a user, so that it can selectively access one or more second operating systems in a different state.

7. Method according to the preceding claim, **characterized in that** the stored second operating systems are provided as an alternative in the menu dialog, when it becomes available.

8. Server system providing a plurality of computer configurations on a plurality of clients in course or poolrooms, wherein the client boots from the network,
wherein the server system manages the plurality of computer system configurations as virtual machines, each computer configuration Is stored as an Image on the server system, and Is Intended for the plurality of clients,
further, an image of a first operating system is stored on the server which allows a network boot, wherein the first operating system is equipped with a hardware emulator for starting a virtual machine, wherein the first operating system cannot be stored on a local disk of the client, so that it must be reloaded after switching off the client;
the first operating system is designed to run after the automatic loading of the virtual machine with the second operating system as an image on the hardware emulator of the first operating system, wherein the selection of the virtual machine to be started from the plurality of virtual machine Is done on the basis of one or more the following parameters: user login on the first operating system,
network address of the client.

9. Server system according to the preceding claim, **characterized In that** a database is available for managing images for the second operating system, on which access is controller on the images using one of the following features: host address, user login,

## Revendications

1. Procédé de distribution d'une pluralité de configurations d'ordinateur sur une pluralité de clients en exécution ou d'espaces collectifs d'au moins un serveur gérant la pluralité de configurations d'ordinateur comme machines virtuelles, chacune des configurations de machine étant stockée sous forme d'une image sur le serveur, et déterminée pour la pluralité de clients, **caractérisé en ce qu'**est stocké également sur le serveur une image d'un premier système d'exploitation, permettant un démarrage de réseau, comprenant les étapes :
- le démarrage réseau du client à partir du serveur en utilisant l'image du premier système d'exploitation avec un émulateur matériel pour le démarrage de la machine virtuel, dans lequel le premier système d'exploitation n'est pas stocké sur un disque local du client, de telle manière à devoir être ré-installé après l'extinction du client ;
- le chargement automatique d'une machine virtuelle avec l'image d'un second système d'exploitation, depuis le serveur opérant sur la base de l'émulateur matériel du premier système exploitation, dans lequel on réalise la sélection de la machine virtuelle à démarrer depuis la pluralité des machines virtuelles sur la base d'un ou plusieurs paramètre(s) suivant(s) : connexion de l'utilisateur sur le premier système d'exploitation, l'adresse réseau du client.

2. Le procédé selon la revendication précédente, **caractérisé en ce que** le serveur comprend une zone de mémoire où sont stockées les images pour le deuxième système d'exploitation, dans lequel l'accès à l'image dépend des paramètres suivants: connexion de l'utilisateur, l'adresse de réseau.

3. Le procédé selon l'une ou plusieurs des revendications précédentes, **caractérisé en ce qu'**un menu s'ouvre automatiquement à la suite du chargement du premier système d'exploitation, lequel permet à l'utilisateur d'effectuer une sélection d'un second système d'exploitation.

4. Le procédé selon la revendication précédente, **caractérisé en ce que** les éléments de sélection sont limitées dans le menu aux paramètres suivants: connexion de l'utilisateur, l'adresse de réseau.

5. Le procédé selon l'une ou plusieurs des deux revendications précédentes, **caractérisé en ce que** la sélection du second système d'exploitation est permise par l'intermédiaire d'entrées dans un service d'annuaire, tels que LDAP.

6. Le procédé selon l'une ou plusieurs des revendications précédentes, **caractérisé en ce que** l'on réalise un stockage de l'état du second système d'exploitation sur une unité de réseau associée à un utilisateur, de sorte qu'il peut sélectivement accéder à un ou plusieurs système d'exploitation étant dans un état différent.

7. Le procédé selon la revendication précédente, **caractérisé en ce que** les second systèmes d'exploitation stockés sont des alternatives au sein du dialogue de menu, lorsque celui-ci devient disponible.

8. Un système de serveur pour fournir des configurations d'ordinateur sur une pluralité de clients en exécution ou d'espaces collectifs, dans lequel le client démarre depuis le réseau, dans lequel le système de serveur gère la pluralité des configurations d'ordinateur comme machines virtuelles, chacune des configurations de machine étant stockée sous forme d'une image sur le système de serveur, et à destination de la pluralité de clients,
en outre, une image d'un premier système d'exploitation est stockée sur le serveur pour permettre un démarrage réseau, dans laquel le premier système d'exploitation est équipé d'un émulateur matériel pour le démarage d'une machine virtuelle, dans lequel le premier système d'exploitation ne peut pas être stocké sur un disque local du client, de telle manière qu'il doit être rechargé après l'extinction du client ;
le premier système d'exploitation étant conçu pour fonctionner à la suite du chargement automatique de la machine virtuelle avec le second système d'exploitation comme une image sur l'émulateur matériel du premier système d'exploitation, dans lequel la sélection de la machine virtuelle à démarrer depuis la pluralité de machines virtuelles est effectuée sur la base de l'un ou plusieurs des paramètre(s) suivant(s) : connexion de l'utilisateur sur le premier système d'exploitation, l'adresse réseau du client.

9. Le système de serveur selon la revendication précédente, **caractérisé en ce que** l'on dispose une base de données pour la gestion des images du second système d'exploitation, sur lequel l'on contrôle l'accès aux images en utilisant une ou plusieurs des caractéristiques suivantes : connexion de l'utilisateur, l'adresse de réseau.
